# EUROPEAN PATENT APPLICATION

(11) **EP 2 466 165 A1**
(43) Date of publication of application: **20.06.2012**
(21) Application number: 11193206.7
(22) Date of filing: 13.12.2011
(51) Int. Cl.: F16D 65/097, F16D 69/04, F16D 65/00

(54) **Brake pad assembly with embedded shim**

(30) Priority: 16.12.2010 CA 2725910
(71) Applicant: Anstro Manufacturing, Inc., Wolcott, CT 06716 (US)
(72) Inventor: Bosco, Robert R., Wolcott, CT Connecticut 06716 (US)
(74) Representative: Plougmann & Vingtoft A/S

(57) **Abstract**

A brake backing plate (110) has a generally planar body with at least one mold hole (150). A generally planar shim (10) is affixed to a first face of the backing plate (110). The shim (10) has at least one integral hook (40) that extends into the at least one mold hole (150) in the backing plate. A friction material (130) is molded onto a second opposite face of the backing plate, and fills the at least one mold hole to thereby embed the hook (40) and retain the shim (10) against the backing plate. A method of making a brake pad assembly is also provided.

## Description

### FIELD OF THE INVENTION

The invention relates to brake pads for automobiles.

### BACKGROUND OF THE INVENTION

A brake pad generally is made up of two components - a backing plate and an attached pad of friction material. In one style of brake pad, the friction material is molded onto the backing plate and fills holes in the backing plate to hold the two components together.

To address the problem of brake noise and squeal, manufacturers often provide a shim on the side of the backing plate opposite the friction material. A shim is a relatively thin sheet of metal that serves as a barrier and insulator between the brake backing plate and the brake piston. Various methods of attaching such shims have been suggested - adhesive, clips, and rivets, among others. A problem of these various approaches is that they require excessive manufacturing and assembly steps.

It has also been proposed to form the shim in the molding process at the same time as the friction material is attached. In this process, a preform is molded onto the backing plate and pressed so that a portion of the friction material or a separate epoxy or adhesive layer below (or behind) the friction material layer on the preform is extruded through the backing plate and extends over the back surface of the backing plate where it hardens and forms a shim layer. Although this is a relatively easy manufacturing process with relatively few assembly steps, the multilayered preforms can be relatively expensive, and there is some doubt as to the effectiveness of the shim portion formed by this process. For one thing, the friction material is not designed with piston noise damping as its primary objective, and the epoxy or adhesive layer may not have sufficient durability and hardness to withstand the stresses of constant wear from the piston. Furthermore, the overall assembly may simply vibrate together thus losing the point of the shim.

To address these drawbacks in the prior art while providing other advantages, the present invention uses the friction material as an attachment platform for embedding a shim to attach it to the brake backing plate. Hooks are provided on the shim to further enhance the embedment.

### SUMMARY OF THE INVENTION

According to a first aspect of the invention, a brake pad assembly is provided. A generally planar shim is affixed to a first face of a brake backing plate. The brake backing plate has a generally planar body with at least one mold hole. The shim has at least one integral hook that extends into the at least one mold hole in the backing plate. A friction material is molded onto a second opposite face of the backing plate, and fills the at least one mold hole to thereby embed the hook and retain the shim against the backing plate.

Preferably, the hook has a downward extending segment and a return segment. For example, the hook may have a generally J-shaped profile. The hook may have a flat bottom and then a return. Alternatively, the hook may have a rounded bottom and then a return.

Preferably, the hook is cut and bent from the shim, so that there is a hole in the shim adjacent to the hook. This hole provides another fillable area for the friction material. That is, the friction material can also fill the hole in the shim when it fills the one or more mold holes in the backing plate. Preferably, the friction material fills the hole without extending behind or beyond the shim. The friction material may or may not be precisely level with the surface of the shim. A level surface may provide some advantage in reducing rattle and vibration when the piston strikes the shim on the backing plate.

According to a second aspect of the invention, a method of making a brake pad assembly is provided:
(1) First, a generally planar shim is affixed to a first face of a brake backing plate, the backing plate having a generally planar body with at least one mold hole, the shim having at least one integral hook that extends into the at least one mold hole in the backing plate; and
(2) Then, a friction material is molded onto a second opposite face of the backing plate, such that the friction material fills the at least one mold hole thereby embedding the hook and retaining the shim against the backing plate once the friction material has cured.

Preferably, the molding step further comprises completely surrounding the hook with friction material.

According to a third aspect of the invention, a method of making a brake pad assembly is provided:
(1) First, a generally planar shim is placed into a shaped mold;
(2) Then, a brake backing plate is placed adjacent to the shim in the mold, the backing plate having a generally planar body with at least one mold hole, the shim having at least one integral hook that extends into the at least one mold hole in the backing plate;
(3) Then, a flowable friction material is pressed into the mold so that it forms a friction pad onto an outer face of the backing plate, and proceeds to fill the at least one mold hole and embed the hook in the friction material; and
(4) Finally, the friction material is allowed to cure so that the shim is retained to the backing plate by the embedded hook.

The shaped mold preferably includes a relief pocket for the shim.

### BRIEF DESCRIPTION OF THE DRAWINGS

Figure 1 is a front view of a shim according to the present invention.
Figure 2 is a back view of the shim of Figure 1.
Figure 3 is a side view of the shim of Figure 1.
Figure 3A is a detailed view of the hook area of the shim shown in Figure 3.
Figure 4 is a front (shim-side) view of a brake pad assembly according to the present invention.
Figure 5 is a back (friction-side) view of the brake pad assembly of Figure 4.
Figure 6 is a cross-sectional view of a brake backing plate according to the present invention along line A-A of the plate portion of the assembly shown in Figure 4.
Figure 7 is a sectional view of a mold according to the present invention.
Figure 8 is a sectional view of a brake pad assembly in the mold.

### DETAILED DESCRIPTION

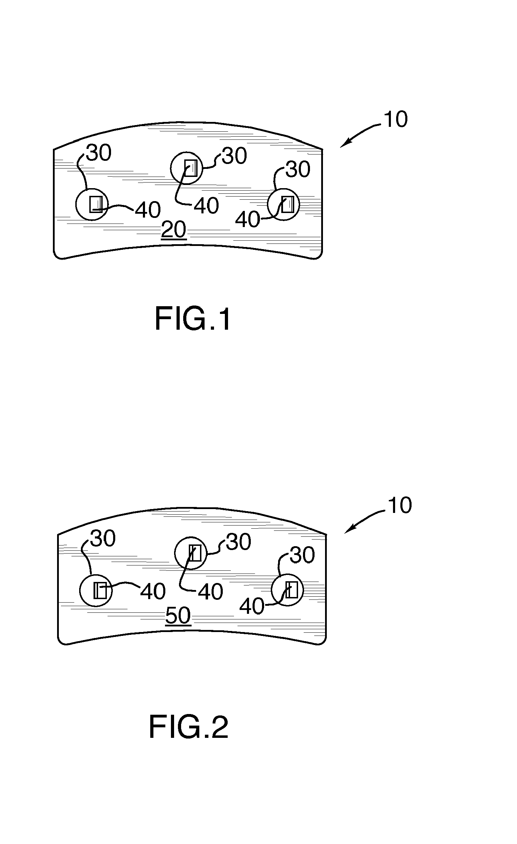

A shim is a relatively thin sheet of metal that serves as a barrier and insulator between the brake backing plate and the piston. The present shim 10 is provided with at least one hook 40. The shim 10 is shown generally at Figures 1 and 2. The front/outer (i.e. piston-facing) face 20 of the shim is shown in Figure 1. The back/inner (i.e. backing plate-facing) face 50 of the shim is shown in Figure 2. Hooks 40 protrude from the shim surface (three are shown in the drawings, but any number of hooks is possible). The hooks 40 (which are preferably integral, being formed from the material of the shim itself) are adjacent to holes 30 in the shim (each hook 40 preferably having a corresponding hole 30). The hooks 40 may be cut and bent out of the material of the shim 10, and thus each hole 30 may be simply the cut area from which the hook 40 was raised. Alternatively, the hooks 40 may be separate pieces attached to the shim 10, or they may be raised from the shim material by some other process. The holes 30 are not necessary to the functioning of the shim, but may add to the retention by providing another area into which friction material may enter and harden.

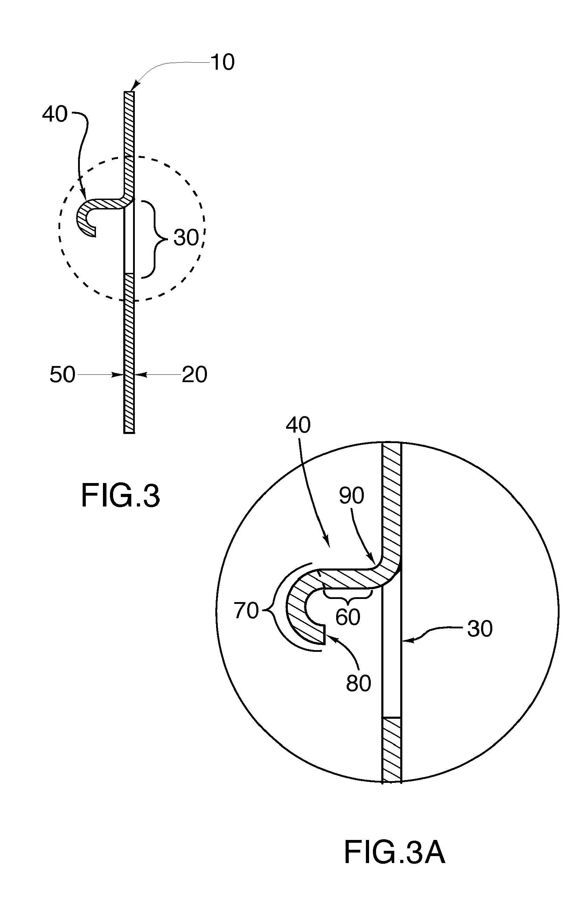

The hook 40 itself is best seen in Figure 3 and in detail in Figure 3A. Preferably, the hook is bent at an angle from the general plane of the rest of the shim body. The bend 90 may be perpendicular to the shim body, although it is not necessary that it have a precise right angle. The shape of the hook is preferably something like a letter J (although variants are also envisioned shaped more like a truncated letter V). A more-or-less straight downward first portion or segment 60 is preferably followed by a more-or-less curved bottom and upwardly extending second portion or segment 70, terminating at a flat or pointed terminal end 80. (Alternatively, although not shown, all or a portion of the first segment may be round, and all or a portion of the second segment may be straight or flat.) The overall length of the hook from bend 90 to terminal end 80 is preferably between approximately 7 to 8 mm. The overall downward reach of the hook is preferably between approximately 4 to 5 mm. The overall width of the hook 40 is preferably between approximately 3 to 5 mm.

The shim 10 is preferably made from a thin steel sheet (thickness preferably less than about 2 mm). It may have one or more coatings applied (such as anti-rust or anti-fingerprint coatings). The shim may also be painted, enameled, printed or embossed (all as well-known in the art). The shim may be a multi-layered composite (such as a steel core with one or more non-metallic layers - e.g. rubber or elastomer).

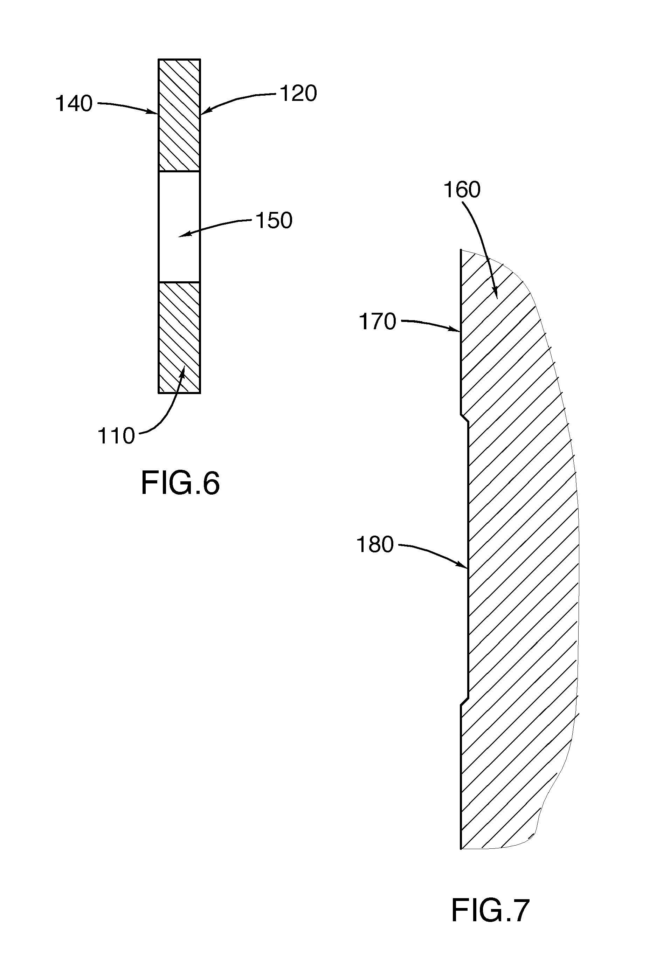

An example of a typical brake backing plate 110 to which the shim may be attached is shown in sectional view in Figure 6. The backing plate 110 has at least one mold hole 150 that extends through the plate from the first (friction-facing) surface 140 to second (shim-facing) surface 120. Such plates are commonly known as "I.M." or "integrally molded" plates in the industry. Methods of making such plates (with round holes, or other shapes of throughbores) are well-known. Typical plate thickness is between approximately 5 to 6 mm.

The hook(s) in the shim are intended to align with (and extend into, and optionally all the way through) the mold hole(s) 150 in the backing plate 110. It is preferred if the hooks 40 are somewhat spaced away from the edges of the mold holes 150 of the backing plate 110 (this allows the hooks 40 to be completely submerged in and surrounded by friction material 130). Alternatively, the hook 40 may touch the edge of the mold hole 150 (or even grip onto the edge). The hooks 40 may face all in one direction or in multiple directions (e.g. opposite each other). Each hook may point towards the interior of its corresponding mold hole or away.

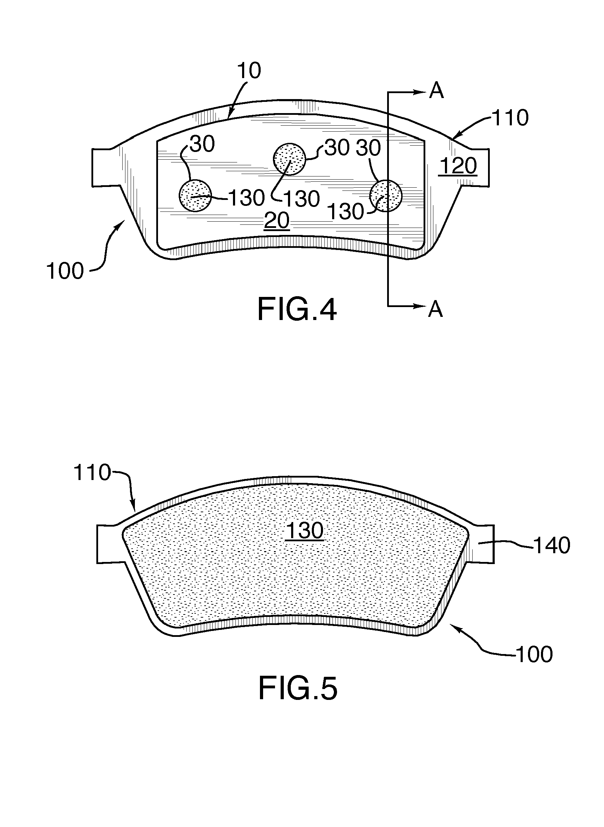

In Figure 4, an assembled view of the plate 110 and shim 10 is shown. The shim 10 preferably covers most of the surface 120 of the backing plate 110, although clearance for attachment edges may be provided in certain styles of plates (e.g. where abutment "ears" are provided on each side for mounting of the plate into a brake caliper). One advantage of the present shim is that no edge-mounting hooks are necessary on the shim for the attachment to the backing plate. The shim does not wrap around the edges of the plate. Thus, a clear border may be provided around the backing plate.

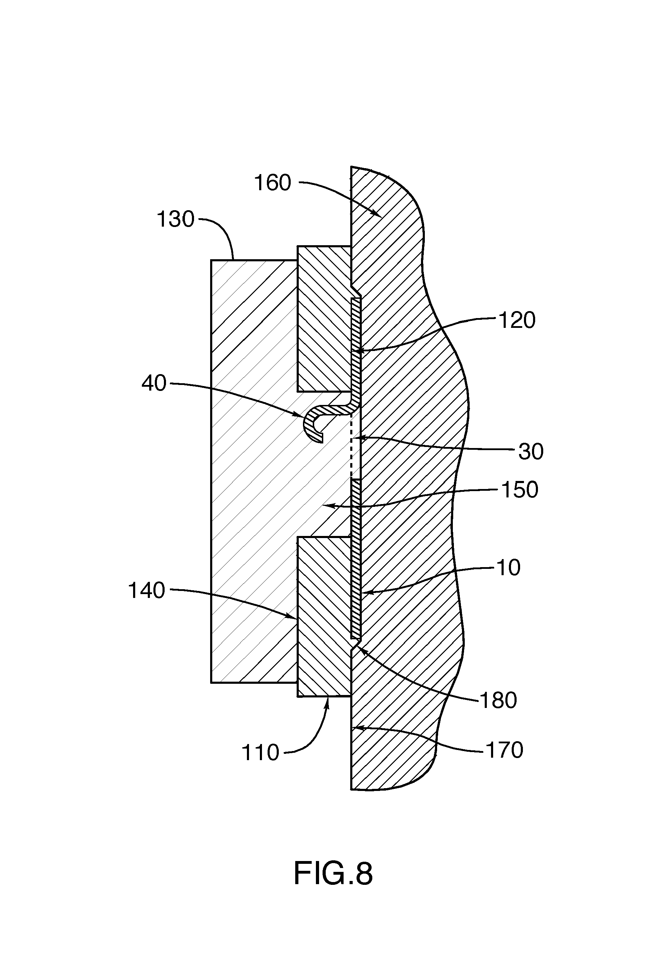

The arrangement for molding the brake pad assembly is shown in section in Figure 8. The brake pad assembly 100 is preferably molded in a friction mold using a flash-molding or positive-molding process. The mold surface 170 preferably has a recessed or indented portion 180 (as shown in Figure 7). Into this recess (or relief pocket), the shim is placed (with hook(s) facing outward from the mold surface). Then, the backing plate 110 is preferably mounted over the shim 10, so that the hook(s) protrude into the mold hole(s) of the backing plate 110. It will be understood that the shim and backing plate may be assembled together in advance before insertion together into the mold. The shim 10 may be pre-treated with an adhesive (such as a thermoset resin), which then activates and adheres the shim to the backing plate 110 under mold conditions.

A measured portion or cake or puck of friction material 130 is applied to the surface 140 of the backing plate 110 in the mold. Pressure is applied to the friction material 130, so that the material softens and is driven smoothly into the mold hole(s) 150. It flows into the hole(s) 150 and also extends into any hole(s) 30 in the shim 10, stopping at the surface of the recess 180. The hook (preferably fully surrounded with friction material) is thus embedded. As the friction material 130 cools and hardens, the embedded hook 40 serves to lock the shim 10 to the brake pad. The shape of the hook (with its up-turned second portion 70) particularly serves to resist delamination of the shim from the backing plate, in contrast to a shim attached by adhesive alone.

The finished brake pad assembly 100 has a friction pad of material 130 on the front side 140 of the backing plate (as shown in Figure 5).

Although not shown in the drawings, another embodiment is contemplated using a longer hook that extends completely through the mold hole in the backing plate. The finished dimensions of the hook are not critical provided that it is capable of extending into the friction material and being retained within it. It is also contemplated that multiple hooks could be used for each mold hole (or each single hook could have multiple hooked ends). Various design options are possible.

One advantage of the present molding process is that an existing mold can be used. A mold designed for the prior art shim extrusion process can be repurposed. That is, the mold cavity that had been used to collect and shape the extruded material for a molded shim can be used instead to hold the metallic shim as an insert.

The foregoing description illustrates only certain preferred embodiments of the invention. The invention is not limited to the foregoing examples. That is, persons skilled in the art will appreciate and understand that modifications and variations are, or will be, possible to utilize and carry out the teachings of the invention described herein. Accordingly, all suitable modifications, variations and equivalents may be resorted to, and such modifications, variations and equivalents are intended to fall within the scope of the invention as described and within the scope of the claims.

## Claims

1. A brake pad assembly, comprising:
a brake backing plate having a generally planar body with at least one mold hole defined therein;
a generally planar shim affixed to a first face of the backing plate, the shim having at least one integral hook that extends into the at least one mold hole in the backing plate; and
a friction material molded onto a second opposite face of the backing plate, and filling the at least one mold hole to thereby embed the hook and retain the shim against the backing plate.

2. The brake pad assembly of claim 1, wherein the hook has a downward extending segment and a return segment.

3. The brake pad assembly of claim 1, wherein the hook has a generally J-shaped profile.

4. The brake pad assembly of claim 1, wherein the hook has a flat bottom and then a return.

5. The brake pad assembly of claim 1, wherein the hook has a rounded bottom and then a return.

6. The brake pad assembly of claim 1, wherein the hook is cut and bent from the shim.

7. The brake pad assembly of claim 1, wherein the hook is adjacent a hole in the shim.

8. The brake pad assembly of claim 7, wherein the friction material also fills the hole in the shim.

9. The brake pad assembly of claim 8, wherein the friction material fills the hole without extending behind or beyond the shim.

10. The brake pad assembly of claim 8, wherein the friction material is level with the surface of the shim.

11. A method of making a brake pad assembly, comprising:
affixing a generally planar shim to a first face of a brake backing plate, the backing plate having a generally planar body with at least one mold hole defined therein, the shim having at least one integral hook that extends into the at least one mold hole in the backing plate; and
molding a friction material onto a second opposite face of the backing plate, such that the friction material fills the at least one mold hole thereby embedding the hook and retaining the shim against the backing plate once the friction material has cured.

12. The method of claim 11, wherein the hook is adjacent a hole in the shim and the friction material also fills the hole in the shim.

13. The method of claim 12, wherein the friction material fills the hole in the shim without extending behind or beyond the shim.

14. The method of claim 13, wherein the friction material fills the hole in the shim so as to be level with an outer surface of the shim.

15. The method of claim 11, wherein the molding step further comprises completely surrounding the hook with friction material.
